# NEUE EUROPÄISCHE PATENTSCHRIFT

(11) **EP 0 288 993 B2**
(45) Veröffentlichungstag und Bekanntmachung des Hinweises auf die Entscheidung über den Einspruch: **29.03.1995**
(45) Hinweis auf die Patenterteilung: 08.08.1990
(21) Anmeldenummer: 88106736.7
(22) Anmeldetag: 27.04.1988
(51) Int. Cl.: F16L 21/06, F16L 17/02

(54) **Vorrichtung zum Verbinden der koaxialen Enden zweier muffenloser Rohre**
Device for joining the coaxial ends of two pipes without mandrels together
Dispositif pour assemblage des extrémités coaxiales de deux tuyaux sans manchons

(30) Priorität: 30.04.1987 DE 8706268 U
(43) Veröffentlichungstag der Anmeldung: 02.11.1988
(73) Patentinhaber: Eisenwerke Fried.Wilh. Düker GmbH & Co., D-97753 Karlstadt (DE)
(72) Erfinder: Bergmann, Karl-Heinz, D-8759 Hösbach (DE); Hardt, Konrad, D-8782 Karlstadt/Main (DE)
(74) Vertreter: Patentanwälte Leinweber & Zimmermann

(56) Entgegenhaltungen:
- EP-A- 0 186 727
- DE-A- 1 806 616
- DE-A- 3 338 899
- DE-A- 3 404 739
- DE-A- 3 445 268
- DE-A- 3 501 583
- DE-A- 3 605 020
- DE-C- 3 404 739
- FR-A- 1 173 717
- US-A- 3 235 293
- US-A- 3 801 141
- US-A- 4 629 217
- Lueger, Lexikon der Technik, Bd. 5, 1963, Seiten 507-511
- Lueger, Lexikon der Technik, Bd. 1, 1960, Seiten 123,124,431,440,441
- Lueger, Lexikon der Technik, Bd.11, 1960, Seite 95

## Beschreibung

Die Erfindung bezieht sich auf eine Vorrichtung zum Verbinden der koaxialen Enden zweier muffenloser Rohre mit einer elastischen Dichtungsmanschette, die an ihrem Innenumfang eine axial mittig umlaufende, radial vorspringende, zwischen die Stirnseiten der beiden Rohrenden greifende Dichtrippe und in einem axialen Abstand beidseits der Dichtrippe umlaufende, radial vorspringende Dichtlippen zur Anlage am Außenumfang der Rohrenden aufweist, mit einer am Außenumfang der Dichtungsmanschette angeordneten Spannschelle, deren Schellenband eine axial mittig umlaufende, in eine radial äußere ringförmige Ausnehmung der Dichtungsmanschette eingreifende Verstärkungssicke mit zylindrischem Sickengrund und zum Außenumfang der Rohrenden hin abgebogene axiale Randbereiche aufweist, und mit einer an den beiden in der Umfangsrichtung einander zugewandten Endbereichen des Schellenbandes angreifenden Spannvorrichtung zum Zusammenziehen des Schellenbandes in der Umfangsrichtung, die an den beiden Endbereichen des Schellenbandes je ein einen axialen Lagerbolzen umschließendes Schlaufenband sowie nur eine axial mittige, die beiden Lagerbolzen durchsetzende Spannschraube aufweist,
Eine derartige bekannte Vorrichtung (DE-A 3 501 583) ermöglicht eine sehr stabile Verbindung der beiden Rohre mit hoher Dichwirkung, weil die Spannschelle infolge der in der Umfangsrichtung des Schellenbandes umlaufenden Verstärkungssicke und der zu den Rohrenden hin abgebogenen axialen Randbereiche des Schellenbandes eine hohe Quersteifigkeit aufweist, die zu einem sicheren Andruck der Dichtungsmanschette an den Außenumfang der Rohrenden und einer gleichmäßigen Druckverteilung führt Selbst bei kleineren Axialabweichungen oder Durchmesserabweichungen der zu verbindenden Rohre wird hierdurch ein sicherer und belastungsfähiger Dichtsitz erreicht. Allerdings beruht diese vorteilhafte Quersteifigkeit der bekannten Vorrichtung teilweise darauf, daß sich die freien Ränder der abgebogenen Randbereiche des Schellenbandes in dessen angezogenem Zustand an den Außenumfang der Rohre anlegen und darauf abstützen. Dieser Kontakt der axialen Ränder des Schellenbandes mit den Rohren bringt aber den Nachteil einer starken Körperschallübertragung längs der Rohre mit sich.

Der Erfindung liegt die Aufgabe zugrunde, eine Vorrichtung der eingangs genannten Art dahingehend weiterzubilden, daß unter Beibehaltung einer hohen Quersteifigkeit und der damit verbundenen hohen und stabilen Dichtwirkung die Körperschallübertragung über die Verbindungsstelle hinweg praktisch ausgeschlossen ist.

Diese Aufgabe wird erfindungsgemäß dadurch gelöst, daß das axiale Ende der abgebogenen Randbereiche des Schellenbandes jeweils als zur Schellenbandachse koaxialer, zylindrischer Bund ausgebildet ist, dessen Durchmesser im angezogenen Zustand des Schellenbands größer als der Rohrdurchmesser ist, und die Dichtungsmanschette an ihren beiden axialen Rändern sich längs des Innenumfangs der Bunde erstreckende Dichtungsfahnen aufweist.

Bei der Erfindung liefern die zylindrischen Bunde, in die die abgebogenen Randbereiche des Schellenbandes auslaufen, einen zusätzlichen Beitrag zur Quersteifigkeit, so daß eine Abstützung der abgebogenen Randbereiche des Schellenbandes auf den Rohren nicht erforderlich ist. Da der Durchmesser der zylindrischen Bunde größer als der Rohrdurchmesser ist, besteht zwischen den Rohren und den Bunden ein Ringraum, der die Berührungsfreiheit zwischen den Randbereichen des Schellenbandes und dem Außenumfang der Rohre sicherstellt. Eine Schallübertragung von dem einen Rohrende über das Schellenband auf das andere Rohrende ist damit ausgeschlossen, weil das Schellenband dabei durch die elastische Dichtungsmanschette allseitig von den Rohren getrennt ist.

Bei der Erfindung erfüllt die Dichtungsmanschette mittels der Dichtungsfahnen den gesamten, zwischen den Bunden und den Rohren begrenzten Ringraum, wodurch die Bunde ohne direkten Kontakt mit dem Rohren über die Dichtungsfahnen elastisch auf dem Außendurchmesser der Rohre zusätzlich abgestützt werden. In Abwesenheit eines Direktkontaktes ist auch hier die Körperschallübertragung unterdrückt.

Eine besonders zweckmäßige Formgebung besteht darin, daß sich die abgebogenen axialen Randbereiche im Anschluß an die koaxialen Bunde axialschnittlich geradlinig unter einem spitzen Flankenwinkel zur Schellenbandachse erstrecken. Bei dieser Ausbildung schließen sich somit die abgebogenen axialen Randbereiche jeweils in der Form eines Kegelstumpfmantels an die zylindrischen Bunde an, wobei sich die Kegelform jeweils zum axialen Ende des Schellenbandes hin verjüngt und dadurch ein Widerlager gegen eine axiale Verdrängung der Dichtungsmanschette beim Spannen des Schellenbandes bildet. Auch wird die kegelstumpfmantelförmige Ausbildung der abgebogenen Randbereiche der beim Übergang des Schellenbandes vom ungespannten zum gespannten Zustand notwendigen Durchmesserverringerung des Schellenbandes gut gerecht.

Eine hinsichtlich eines möglichst geringen Werkstoffbedarfs für das Schellenband vorteilhafte Ausführungsform der Erfindung ist derart bemessen, daß die axiale Breite der Bunde kleiner oder gleich der axialen Breite der an die Bunde anschließenden abgebogenen Randbereiche des Schellenbandes ist

Ferner hat es sich in diesem Zusammenhang als zweckmäßig erwiesen, daß der Flankenwinkel der axialen Randbereiche zwischen 25° und 45° liegt. Diese Bemessung führt einerseits zu einer ausreichenden Quersteifigkeit und läßt andererseits ohne weiteres die für das Spannen des Schellenbandes nötige Durchmesseränderung verbiegungsfrei zu.

Gemäß einem weiteren Gedanken der Erfindung ist in einer bevorzugten Ausführungsform vorgesehen, daß die Verstärkungssicke der Spannschelle axialschnittlich eine zur Schellenbandachse parallele, geradlinige Basis sowie zwei sich von der Basis aus konisch erweiternde geradlinige Seitenflanken aufweist und daß der Innendurchmesser des von der Basis aufgespannten zylindrischen Sickengrundes etwa gleich dem Innendurchmesser der Bunde ist. Durch diese Formgebung der Verstärkungssicke wird nicht nur eine günstige Verteilung des von der Spannschelle auf die Dichtungsmanchette ausgeübten Druckes erreicht, sondern gleichzeitig sichergestellt, daß die Bunde sicher in einem der radialen Dicke der Dichtungsmanschette unterhalb des zylindrischen Sickengrundes entsprechenden Abstand vom Außenumfang der zu verbindenden Rohre gehalten werden.

In diesem Zusammenhang ist es vorteilhaft, daß die axiale Breite des Sickengrundes größer oder gleich der axialen Breite der sich jeweils zwischen den Seitenflanken der Verstärkungssicke und den jeweils dazu benachbarten abgebogenen Randbereichen zylindrisch erstreckenden Bereiche des Schellenbandes ist. Durch diese Ausbildung wird das Schellenband mittels des zylindrischen Sickengrundes großflächig auf dem darunterliegenden zylindrischen Bereich der Dichtungsmanschette abgestützt, so daß die Schellenbandachse genau längs der gemeinsamen Achse der beiden miteinander zu verbindenden Rohre ausgerichtet wird und sichergestellt ist, daß die zylindrischen Bunde längs ihres ganzen Umfanges vom Außenumfang der Rohre etwa den gleichen Abstand haben.

Schließlich besteht ein, Gedanke der Erfindung darin, daß das sich zwischen den abgebogenen Randbereichen des Schellenbandes in der Umfangsrichtung erstreckende Schlaufenband axiale Seitenfahnen aufweist, mit denen es sich auf den abgebogenen Randbereichen und den Bunden abstützt. Hierdurch wird eine sehr gleichmäßige Einleitung der Spannkraft in das Schellenband erreicht. Da ferner die durch die Spannschraube zusammengezogenen Schlaufenbänder an dem Schellenband tangential angreifen und dadurch die Spannkraft in das Schellenband tangential einleiten, kommt es insbesondere auch nicht zu Verbiegungen der Endbereiche des Schellenbandes.

Weitere Merkmale, Einzelheiten und Vorteile der Erfindung ergeben sich aus der folgenden Beschreibung und der Zeichnung, auf die bezüglich einer erfindungswesentlichen Offenbarung aller im Text nicht erwähnten Einzelheiten ausdrücklich hingewiesen wird. Hierin zeigen:
Fig. 1 eine Aufsicht auf eine Spannschelle einer Vorrichtung zum Verbinden zweier muffenloser Rohre in axialer Richtung,
Fig. 2 einen axialen Schnitt durch die Spannschelle, wobei der Ringraum unter der zylindrischen Bunden abweichend von der beanspruchten Erfindung unausgefüllt dargestellt ist gemäß der Linie A-B von Fig. 1,
Fig. 3 eine Aufsicht auf die Spannschelle und deren Spannvorrichtung in radialer Richtung, und
Fig. 4 eine Abwicklung des bei der in Fig. 4 dargestellten Spannvorrichtung verwendeten Schlaufenbandes.

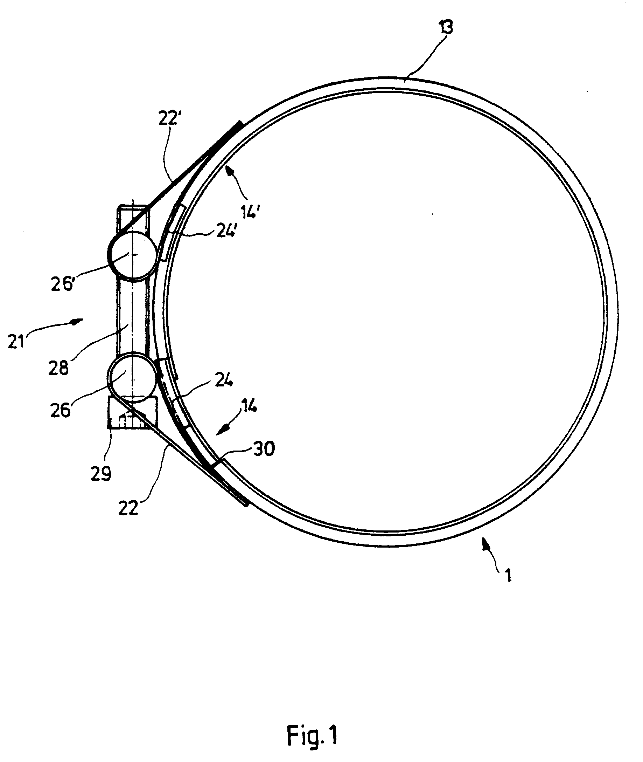

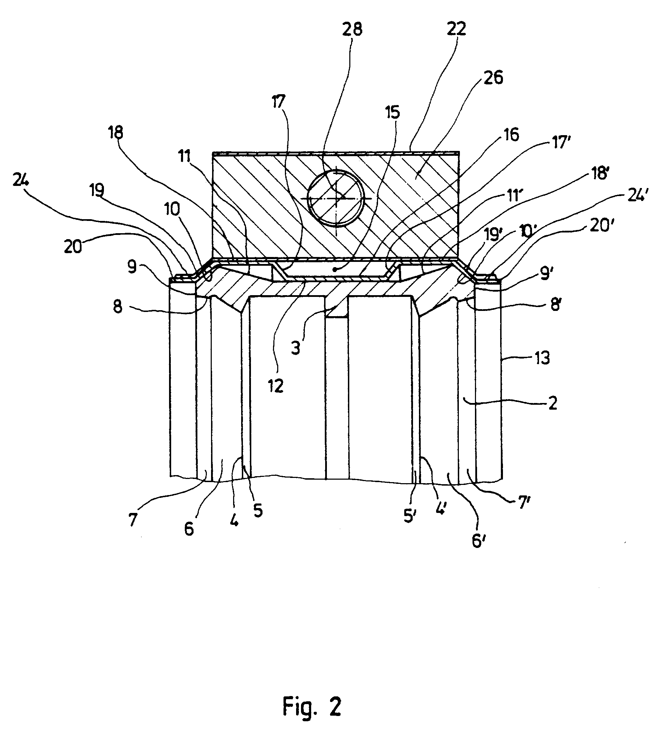

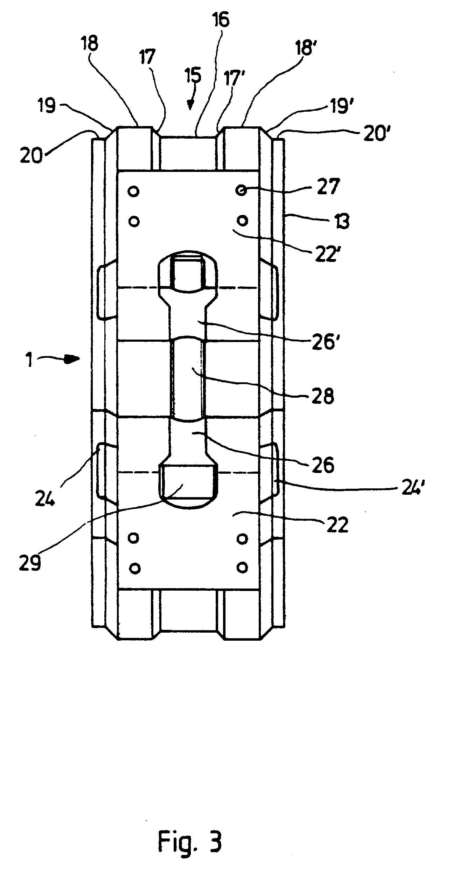

Eine Vorrichtung zum Verbinden der koaxialen Enden zweier muffenloser Rohre weist eine in Fig. 1 und 3 dargestellte kreisringförmige Spannschelle 1 auf, in die eine in der Querschnittsdarstellung von Fig. 2 dargestellte elastische Dichtungsmanschette 2, beispielsweise aus Gummi, eingelegt ist. Die Dichtungsmanschette 2 weist an ihrem Innenumfang eine radial vorspringende Dichtrippe 3 von rechteckigem Querschnitt auf, welche in der Mitte der axialen Breite der Dichtungsmanschette 2 in deren Umfangsrichtung umläuft. Beidseits der radialen Mittelebene der Dichtrippe 3 sind in einem axialen Abstand davon am Innenumfang der Dichtungsmanschette 2 radial vorspringende, umlaufende Dichtlippen 4, 4' vorgesehen, deren zur Dichtrippe 3 weisende, axial innere Flanken 5, 5' verhältnismäßig steil aus dem zwischen der Dichtrippe 3 und den Dichtlippen 4,4' jeweils zylindrisch und koaxial zur Spannschellenachse verlaufenden Innenumfang der Dichtungsmanschette 2 ansteigen, während die radial äußeren Flanken 6,6' im Vergleich dazu flacher abfallen. Angrenzend an die Flanken 6,6' der Dichtlippen 4,4' ist jeweils eine weitere umlaufende Dichtlippe 7,7' vorgesehen, die jedoch radial weniger weit nach innen vorspringen als die Dichtlippen 4,4'. Die ebenfalls flacher verlaufenden axial äußeren Flanken 8,8' der Dichtlippen 7,7' fallen jeweils zu den radial gerichteten Stirnseiten 9,9' der Dichtungsmanschette 2 hin ab.

Wie aus Fig. 2 ferner hervorgeht, weist der Außenumfang der Dichtungsmanschette 2 querschnittlich zwei jeweils von den kreisringförmigen Stirnseiten 9,9' aus schräg axial nach innen ansteigende kurze Flanken 10,10' auf, die sich axial etwa jeweils bis zu der darunterliegenden Einsenkung zwischen den axial äußeren Dichtlippen 7,7' und den axial inneren Dichtlippen 4,4' erstrecken. An die radial ansteigenden Flanken 10,10' schließt sich jeweils eine radial abfallende Flanke 11,11' von geringerer Steilheit an. Zwischen den Flanken 11,11' erstreckt sich schließlich ein zylindrischer Bereich 12, dessen axiale Breite etwas kleiner ist als die axiale Breite des am Innenumfang zwischen den Dichtlippen 4,4' begrenzten zylindrischen Bereichs.

Die Spannschelle 1 weist ein insbesondere aus Fig. 2 und 3 im einzelnen ersichtliches Schellenband 13 aus einem hinreichend zugfesten und beständigen Werkstoff, beispielsweise aus rostfreiem Stahl, auf, das gemäß Fig. 1 an einer Stelle des Umfanges axialschnittlich geteilt ist, so daß die dort einander zugewandten Endbereiche 14,14' unter Verringerung des Durchmessers des Schellenbandes 13 zusammengezogen werden können. Wie insbesondere aus Fig. 2 und 3 hervorgeht, weist das Schellenband 13 eine radial nach innen gerichtete Verstärkungssicke 15 auf, die axial mittig in der Umfangsrichtung umläuft Diese Verstärkungssicke 15 greift in die zwischen den Flanken 11,11' der Dichtungsmanschette 2 begrenzte radial äußere Ausnehmung der Dichtungsmanschette 2 ein, ohne sie jedoch vollständig auszufüllen. Im einzelnen ist der mit seiner Innenfläche an dem zylindrischen Bereich 12 der Dichtungsmanschette 2 anliegende Sickengrund 16 ebenfalls zylindrisch ausgebildet, wobei seine axiale Breite höchstens gleich der axialen Breite des zylindrischen Bereichs, 12 ist. Im Anschluß an die axialen Enden des Sickengrundes 16 steigt das Schellenband 13 mit schrägen Flanken 17,17' axial und radial nach außen an. An die axial und radial äußeren Enden der Flanken 17,17' schließen sich jeweils zur Schellenbandachse koaxiale zylindrische Bereiche 18,18' an, deren axiale Breite jedoch kleiner ist als die axiale Breite des Sickengrundes 16.

Wie ferner aus Fig. 2 und 3 hervorgeht, sind die sich an die zylindrischen Bereiche 18,18' axial außen anschließenden Randbereiche 19,19' des Schellenbandes 13 wieder radial nach innen abgebogen, wobei die im Querschnitt von Fig. 2 geradlinigen Flanken der Randbereiche 19,19' unter einem Flankenwinkel von 25° bis 45° in bezug auf die Schellenbandachse angeordnet sein können. Dabei ist bei der Darstellung in Fig. 2 dieser Flankenwinkel flacher als der Neigungswinkel zwischen der Schellenbandachse und den die Verstärkungssicke 15 begrenzenden Flanken 17,17'. Am axial äußeren Ende der abgebogenen Randbereiche 19,19' ist das Schellenband 13 in der Form von zur Schellenbandachse koaxialen, zylindrischen Bunden 20,20' ausgebildet. Die Breite der abgebogenen Randbereiche 19,19' ist dabei derart bemessen, daß der Innendurchmesser der Bunde 20,20' etwa gleich dem Innendurchmesser des zylindrischen Sickengrundes 16 ist. Die axiale Breite der Bunde 20,20' ist deutlich kleiner als die der zylindrischen Bereiche 18,18' des Schellenbandes 13. Sie ist in dem dargestellten Ausführungsbeispiel aber auch noch etwas kleiner als die Breite der abgebogenen Randbereiche 19,19'.

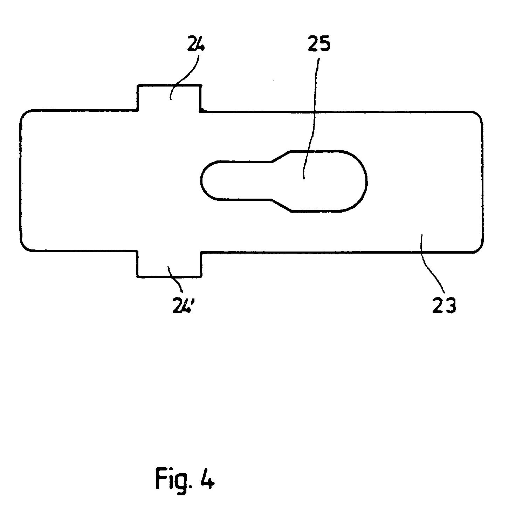

Wie aus Fig. 1 und 3 in seitlicher bzw. planer Aufsicht und aus Fig. 2 querschnittlich ersichtlich ist, greift an den azimutalen Endbereichen 14,14' des Schellenbandes 13 eine Spannvorrichtung 21 an, die zwei einander in Umfangsrichtung zugewandte Schlaufenbänder 22,22' aufweist, deren eines an dem Endbereich 14 und deren anderes an dem Endbereich 14' angeschweißt ist. Hierfür ist ein in Fig. 4 dargestellter, ebener Zuschnitt 23 von länglich rechteckiger Form mit sich von den längeren Rechteckseiten aus symmetrisch zur Mittellängsachse seitlich erstreckenden Seitenfahnen 24,24' und einem sich in der Richtung der Längsmittelachse erstreckenden Langloch 25 versehen, dessen den Seitenfahnen 24,24' abgewandtes Ende erweitert ist Dieser Zuschnitt 23 ist gemäß Fig. 1 zur Bildung der Schlaufenbänder 22,22' um seine kürzere Mittelachse unter einem dem Radius je eines Lagerbolzens 26,26' entsprechenden Radius derart umgebogen, daß die dem erweiterten Ende des Langloches 25 benachbarte kürzere Rechteckseite, in bezug auf das Schellenband 13 gesehen außen, auf der gegenüberliegenden Rechtecksseite zu liegen kommt.

Die mit den einander zugewandten und sich parallel zur Schellenbandachse erstreckenden Lagerbolzen 26,26' versehenen Schlaufenbänder 22,22' erstrecken sich gemäß Fig. 3 an den Endbereichen 14,14' des Schellenbandes 13 zwischen dessen abgebogenen Randbereichen 19,19' und sind auf den zylindrischen Bereichen 18,18' mit je zwei Schweißstellen 27 festgelegt. Die seitlichen Fahnen 24,24' jedes Schellenbandes 22,22' erstrecken sich dabei axial über die abgebogenen Randbereiche 19,19' und die daran anschließenden Bunde 20,20', wobei, wie aus Fig. 2 hervorgeht, die Seitenfahnen 24,24' axialschnittlich der Form der abgebogenen Bereiche 19,19' und der Bunde 20,20' angepaßt sind, so daß sie sich darauf vollflächig abstützen.

Die im Bereich des Langloches 25 durch die Schlaufenbänder 22,22' hindurch freiliegenden Mittenbereiche der Lagerbolzen 26,26' sind mit jeweils einer Bohrung versehen, wobei die Bohrung des einen Lagerbolzens 26 dem Durchtritt einer einzigen, tangential zum Schellenband 13 und in dessen radialer Mittelebene verlaufenden Spannschraube 28 und die Bohrung des anderen Lagerbolzens 26' als Gewindebohrung für die Spannschraube 28 dient. Die Erweiterung des Langlochs 25 dient dabei der Aufnahme des gegenüber dem Schraubenschaft vergrößerten Schraubenkopfes 29.

Fig. 1 läßt noch erkennen, daß sich die Endbereiche 14,14' des Schellenbandes 13 überlappen. Zum Ausgleich der wegen der Überlappung auftretenden gegenseitigen radialen Versetzung der Endbereiche 14,14' ist der eine Endbereich 14 etwa um die Materialstärke des Schellenbandes 13 bei im übrigen deckungsgleicher Querschnittsform abgekröpft, was sich durch die in Fig. 1 dargestellte Kröpfstelle 30 äußert.

Im Gebrauch werden die beiden miteinander zu verbindenden Enden der muffenlosen Rohre axial in die Vorrichtung eingeführt, bis ihre Stirnseiten an der in Fig. 2 dargestellten Dichtrippe 3 anliegen. Dabei begünstigt der Verlauf der Flanken 6,8 bzw. 6' ,8' das axiale Einfügen der Rohrenden.Durch Anziehen der Spannschraube 28 werden die Dichtlippen 4,4' und 7,7' mit festem Sitz an den Außenmantel der Rohre angedrückt, wobei der zwischen den radial äußeren Flanken 11,11' der Dichtungsmanschette 2 einerseits und den Flanken 17,17' sowie den angrenzenden zylindrischen Bereiche 18,18' andererseits begrenzte freie Raum als Verdrängungsraum für die elastische Dichtungsmanschette 2 dient. Die Bunde 20,20' halten auch im vollangezogenen Zustand des Schellenbandes 13 einen radialen Abstand zu den Rohren, der bei dem in Fig. 2 dargestellten Ausführungsbeispiel durch die Wandstärke der Dichtungsmanschette 2 in ihrem zylindrischen Bereich 12 bestimmt ist.

## Patentansprüche

1. Vorrichtung zum Verbinden der koaxialen Enden zweier muffenloser Rohre mit einer elastischen Dichtungsmanschette (2), die an ihrem Innenumfang eine axial mittig umlaufende, radial vorspringende, zwischen die Stirnseiten der beiden Rohrenden greifende Dichtrippe (3) und in einem axialen Abstand beidseits der Dichtrippe umlaufende, radial vorspringende Dichtlippen (4,4') zur Anlage am Außenumfang der Rohrenden aufweist, mit einer am Außenumfang der Dichtungsmanschette angeordneten Spannschelle (1), deren Schellenband (13) eine axial mittig umlaufende, in eine radial äußere ringförmige Ausnehmung der Dichtungsmanschette eingreifende Verstärkungssicke (15) mit zylindrischem Sickengrund (16) und zum Außenumfang der Rohrenden hin abgebogene axiale Randbereiche (19,19') aufweist, und mit einer an den beiden in der Umfangsrichtung einander zugewandten Endbereichen des Schellenbandes angreifenden Spannvorrichtung (21) zum Zusammenziehen des Schellenbandes in der Umfangsrichtung, die an den beiden Endbereichen (14,14') des Schellenbandes (13) je ein einen axialen Lagerbolzen (26,26') umschließendes Schlaufenband (22,22') sowie nur eine axial mittige, die beiden Lagerbolzen (26,26') durchsetzende Spannschraube (28) aufweist, dadurch gekennzeichnet, daß das axiale Ende der abgebogenen Randbereiche (19,19') des Schellenbandes (13) jeweils als zur Schellenbandachse koaxialer, zylindrischer Bund (20,20') ausgebildet ist, dessen Durchmesser im angezogenen Zustand des Schellenbandes (13) größer als der Rohrdurchmesser ist, und daß die Dichtungsmanschette (2) an ihren beiden axialen Rändem (9,9') sich längs des Innenumtanges der Bunde (20, 20') erstreckende Dichtungsfahnen aufweist.

2. Vorrichtung nach Anspruch 1 dadurch gekennzeichnet, daß sich die abgebogenen axialen Randbereiche (19,19') im Anschluß an die koaxialen Bunde (20,20') axialschnittlich geradlinig unter einem spitzen Flankenwinkel zur Schellenbandachse erstrecken.

3. Vorrichtung nach Anspruch 2, dadurch gekennzeichnet, daß die axiale Breite der Bunde (20,20') kleiner oder gleich der axialen Breite der an die Bunde (20,20') anschließenden abgebogenen Randbereiche (19,19') des Schellenbandes (13) ist.

4. Vorrichtung nach Anspruch 2 oder 3, dadurch gekennzeichnet, daß der Flankenwinkel zwischen 25° und 45° liegt.

5. Vorrichtung nach einem der Ansprüche 1 bis 4, dadurch gekennzeichnet, daß die Verstärkungssicke (15) der Spannschelle (1) axialschnittlich eine zur Schellenbandachse parallele, geradlinige Basis sowie zwei sich von der Basis aus konisch erweiternde geradlinige Seitenflanken (17,17') aufweist und daß der Innendurchmesser des von der Basis aufgespannten zylindrischen Sickengrundes (16) etwa gleich dem Innendurchmesser der Bunde (20,20') ist.

6. Vorrichtung nach Anspruch 5, dadurch gekennzeichnet, daß die axiale Breite des Sickengrundes (16) größer oder gleich der axialen Breite der sich jeweils zwischen den Seitenflanken (17,17') der Verstärkungssicke (15) und den jeweils dazu benachbarten abgebogenen Randbereichen (19,19') zylindrisch erstreckenden Bereiche (18,18') des Schellenbandes (13) ist.

7. Vorrichtung nach einem der Ansprüche 1 bis 6, dadurch gekennzeichnet, daß das sich zwischen den abgebogenen Randbereichen (19,19') des Schellenbandes (13) in der Umfangsrichtung erstreckende Schlaufenband (28,28') axiale Seitenfahnen (24,24') aufweist, mit denen es sich auf den abgebogenen Randbereichen (19,19') und den Bunden (20,20') abstützt.

## Claims

1. Device for connecting the coaxial ends of two pipes without bushings to an elastic sealing sleeve (2) which on its inner circumference has a sealing rib (3) rotating axially centrally, projecting radially and engaging between the front sides of the two pipe ends, and sealing lips (4, 4') rotating at an axial distance on both sides of the sealing rib and projecting radially, for contact on the outer circumference of the pipe ends, having a tightening clamp (1) arranged on the outer circumference of the sealing sleeve, the clamp strap (13) of the tightening clamp having a strengthening bead (15), with cylindrical bead base (16), rotating axially centrally and engaging into a radially outer annular recess of the sealing sleeve, and axial edge regions (19, 19') offset towards the outer circumference of the pipe ends, and having a tightening device (21) engaging on the two end regions of the clamp strap directed to one another in the circumferential direction, for drawing together the clamp strap in the circumferential direction, which has at the two end regions (14, 14') of the clamp strap (13) in each case a loop strap (22, 22') enclosing an axial bearing bolt (26, 26') as well as only one axially central tightening screw (28) passing through the two bearing bolts (26, 26'), characterized in that the axial end of the offset edge regions (19, 19') of the clamp strap (13) in each case is constructed as cylindrical band (20, 20') coaxial to the clamp strap axis, the diameter of the band in the tightened state of the clamp strap (13) being greater than the pipe diameter, and in that the sealing sleeve (2) on its two axial edges (9, 9') has sealing lugs extending along the inner circumference of the bands (20, 20').

2. Device according to claim 1, characterized in that the offset axial edge regions (19, 19') connected to the coaxial bands (20, 20') extend in an axial-sectional linear manner under a pointed flank angle to the clamp strap axis.

3. Device according to claim 2, characterized in that the axial width of the bands (20, 20') is less than or the same as the axial width of the offset edge regions (19, 19') of the clamp strap (13) connected to the bands (20, 20').

4. Device according to claim 2 or 3, characterized in that the flank angle lies between 25° and 45°.

5. Device according to one of claims 1 to 4, characterized in that the strengthening bead (15) of the tightening clamp (1) in an axial-sectional manner has a linear base parallel to the clamp strap axis, as well as two linear side flanks (17, 17') extending conically from the base, and in that the inner diameter of the cylindrical bead base (16), clamped by the base, is approximately the same as the inner diameter of the bands (20, 20').

6. Device according to claim 5, characterized in that the axial width of the bead base (16) is greater than or the same as the axial width of the regions (18, 18') of the clamp strap (13) extending cylindrically in each case between the side flanks (17, 17') of the strengthening bead (15) and the offset edge regions (19, 19') respectively adjacent thereto.

7. Device according to one of claims 1 to 6, characterized in that the loop strap (28, 28') extending between the offset edge regions (19, 19') of the clamp strap (13) in the circumferential direction has axial side lugs (24, 24') with which it is supported on the offset edge regions (19, 19') and the bands (20, 20').

## Revendications

1. Dispositif pour relier les extrémités coaxiales de deux tuyaux sans manchon, comportant une manchette d'étanchéité élastique (2) qui présente sur sa périphérie intérieure une nervure d'étanchéité périphérique, axialement centrée, radialement saillante (3), s'appliquant entre les côtés frontaux, des daux extrémités de tuyaux et, selon un intervalle axial des deux côtés de la nervure d'étanchéité, des lèvres d'étanchéité périphériques (4, 4'), radialement saillantes, prenant appui sur la périphérie extérieure des extrémités de tuyaux, une bride de serrage (1) disposée sur la périphérie extérieure de la manchette d'étanchéité, dont la bande de fixation (13) comporte une moulure de renforcement périphérique (15) à profil de base cylindrique, (16) axialement centrée, s'engageant dans un évidement annulaire, radialement extérieur, de la manchette d'étanchéité et des zones marginales axiales (19, 19') recourbées en direction de la périphérie extérieure des extrémités de tuyaux, et un dispositif de serrage (21) agissant sur les deux zones d'extrémités de la bande de fixation, tournées l'une vers l'autre dans la direction périphérique, pour resserrer la bande de fixation dans la direction périphérique, ce dispositif de serrage (21) comportant sur les deux zones d'extrémité (14, 14') de la bande de fixation (13) respectivement une bande bouclée (22, 22') entourant un boulon d'appui axial (26, 26') ainsi qu'une seule vis de serrage (28) axialement centrée qui traverse les deux boulons d'appui (26, 26'), caractérisé en ce que chaque extrémité axiale des zones marginales recourbées (19, 19') de la bande de fixation (13) est conformée en épaulement cylindrique (20, 20'), coaxial à la bande de fixation, dont le diamètre est supérieur au diamètre des tuyaux lorsque la bande de fixation (13) est en position serrée et en ce que la manchette d'étanchéité (2) comporte sur ses deux bords axiaux (9, 9') des talons de garniture qui s'étendent le long de la périphérie intérieure des épaulements (20, 20').

2. Dispositif selon la revendication 1, caractérisé en ce que les zones marginales recourbées (19, 19') axiales, situées dans le prolongement des épaulements coaxiaux (20, 20'), s'étendent, en coupe axiale, de manière rectiligne en formant un angle de flanc aigu par rapport à l'axe de la bande de fixation.

3. Dispositif selon la revendication 2, caractérisé en ce que la largeur axiale des épaulements (20, 20') est inférieure ou égale à la largeur axiale des zones marginales recourbées (19, 19') de la bande de fixation (13) qui sont contiguës aux épaulements (20, 20').

4. Dispositif selon la revendication 2 ou 3, caractérisé en ce que l'angle de flanc est compris entre 25° et 45°.

5. Dispositif selon l'une quelconque des revendications 1 à 4, caractérisé en ce que la moulure de renforcement (15) de la bride de serrage (1) présente, en coupe axiale, une base rectiligne, parallèle à l'axe de la bande de fixation, ainsi que deux flancs latéraux (17, 17') rectilignes s'élargissant de manière conique à partir de la base et que le diamètre intérieur du fond de moulure (16) cylindrique fixé par la base est approximativement égal au diamètre intérieur des épaulements (20, 20').

6. Dispositif selon la revendication 5, caractérisé en ce que la largeur axiale du fond de moulure (16) est supérieure ou égale à la largeur axiale des zones (18, 18') de la bande de fixation (13) qui s'étendent de manière cylindrique respectivement entre les flancs latéraux (17, 17') de la moulure de renforcement (15) et des zones marginales recourbées (19, 19') respectivement voisines desdits flancs latéraux.

7. Dispositif selon l'une quelconque des revendications 1 à 6, caractérisé en ce que la bande bouclée (28, 28'), s'étendant entre les zones marginales recourbées (19, 19') de la bande de fixation (13) dans la direction périphérique, comporte des talons latéraux (24, 24') axiaux au moyen desquels elle s'appuie sur les zones marginales recourbées (19, 19') et sur les épaulement (20, 20').
